# FASCICULE DE BREVET EUROPEEN

(11) **EP 0 822 206 B1**
(45) Date de publication et mention de la délivrance du brevet: **05.02.2003**
(21) Numéro de dépôt: 97401763.4
(22) Date de dépôt: 22.07.1997
(51) Int. Cl.: C08F 220/12, C09J 133/06

(54) **Polyméres adhésifs sensibles à la pression**
Polymere druckempfindliche Klebstoffe
Pressure-sensitive adhesive polymers

(30) Priorité: 31.07.1996 FR 9609663
(43) Date de publication de la demande: 04.02.1998
(73) Titulaire: Atofina, 92800 Puteaux (FR)
(72) Inventeur: Vanhoye, Didier, 60600 Breuil Le Vert (FR); Lebez, Jean, 27000 Evreux (FR); Melot, Denis, 27300 Bernay (FR); Wiegert, Cyril, 27300 Bernay (FR)
(74) Mandataire: Rieux, Michel

(56) Documents cités:
- EP-A- 0 401 200
- WO-A-91/02007
- WO-A-93/08239

## Description

La présente invention porte sur des polymères adhésifs sensibles à la pression présentant un très bon compromis adhésion/cohésion.

Les auto-adhésifs en phase aqueuse ont connu un essor important depuis le début des années 1970 pour remplacer les produits en solution sous la contrainte des nouvelles réglementations environnementales et des augmentations du prix des solvants.

Les adhésifs sensibles à la pression doivent posséder les caractéristiques générales suivantes :
- être capables de se déformer sous de faibles pressions pour obtenir un mouillage immédiat de la surface ;
- posséder des propriétés visco-élastiques suffisantes pour conserver, après suppression de la force appliquée, une position permanente.

Les liaisons formées par ces adhésifs avec le support sont d'énergie relativement faible et beaucoup d'applications requièrent un niveau de cohésion plus important que celui de l'adhésion (pelage, collant) pour obtenir une rupture adhésive de la surface.

L'aptitude d'un adhésif sensible à la pression à bien mouiller une surface peut être corrélée à sa température de transition vitreuse (Tg) et à sa masse moléculaire. Généralement, l'obtention d'une Tg inférieure à -25°C, voire à -40°C, par copolymérisation de monomères acryliques et/ou vinyliques en présence d'agents de transfert, permet d'obtenir le niveau de collant souhaité.

Cependant l'influence de la Tg et de la masse moléculaire sur les propriétés adhésives est antagoniste de leur influence sur la cohésion.

Pour améliorer la force cohésive des adhésifs sensibles à la pression sans détériorer les propriétés adhésives, une très légère réticulation est souvent utilisée par emploi de monomères multifonctionnels, tel que décrit dans "Recent developments in acrylic polymers for latex adhesives" RAPRA 1981, Volume 18 n° 5, Abst. 7761431c.

L'incorporation de monomères chélatants a également été décrite dans la demande internationale WO 91/02759, afin d'augmenter la cohésion des auto-adhésifs après formulation de ceux-ci avec de l'acétate d'aluminium.

La post-addition de tels additifs (Zn(Ac)₂, Al(Ac)₃) est par ailleurs souvent employée pour augmenter le niveau de cohésion des polymères contenant des fonctions carboxyliques. Cependant, l'utilisation de latex fortement carboxylés pose des problèmes de synthèse et d'application. En effet, la copolymérisation des acides acrylique et méthacrylique monomères en proportion pondérale du polymère supérieure à 6% conduit à des problèmes d'instabilité et entraîne une baisse du pelage. De plus, la grande différence de Tg entre les acides et leurs sels rend la Tg de la composition résultante très sensible aux variations de pH.

La recherche d'un bon compromis adhésion/cohésion reste donc toujours une des préoccupations des formulateurs. Dans ce cadre, toute solution permettant d'améliorer la cohésion d'un adhésif sensible à la pression sans faire chuter les propriétés adhésives et pour un coût compatible avec l'application, présente un intérêt évident.

La Société déposante a maintenant découvert de façon surprenante qu'un adhésif sensible à la pression, présentant un haut niveau de cohésion associé à de bonnes propriétés adhésives de pelage et de collant peut être obtenu par copolymérisation d'une faible quantité de monomère (méth)acrylique ou vinylique comportant un groupe uréido associée à une structure monomérique contenant un monomère de Tg ≥ 0°C, un monomère de basse Tg, un monomère de type acide carboxylique insaturé et un monomère (méth)acrylique possédant une structure éthoxylée donnée, pour une Tg globale du copolymère inférieure ou égale à -25°C.

La haute force cohésive résulte de l'apport du ou des monomères à structure uréido, et le bas compromis cohésion/adhésion est obtenu par action sur la Tg du copolymère et sur la nature de la composition monomérique.

Si l'utilisation des monomères (méth)acryliques ou vinyliques à structure uréido est bien connue pour améliorer l'adhésion, et plus particulièrement l'adhésion humide de revêtements aqueux, et pour limiter les émissions de formaldéhyde dans les dispersions textiles, on ne trouve pas de document de la littérature décrivant l'emploi de ces monomères pour augmenter la force cohésive d'un adhésif sensible à la pression. On note cependant, dans la demande internationale 91/02759, l'utilisation de méthacrylamide d'éthylimidazolidone dans la composition polymère de l'Exemple 18, mais sans que l'on puisse constater un effet positif de ce monomère, l'augmentation de la cohésion étant apportée par le méthacrylate d'acétoacétoxyéthyle.

La présente invention a donc pour objet un polymère adhésif sensible à la pression, obtenu par polymérisation en émulsion du mélange des monomères suivants, pour un total de 100% en poids :
(A) 40 à 95%, de préférence 50 à 65%, en poids d'au moins un monomère (méth)acrylique ou vinylique capable de conduire à un homopolymère ayant une température de transition vitreuse inférieure ou égale à -40°C ;
(B) 2 à 50%, de préférence 25 à 45%, en poids d'au moins un monomère (méth)acrylique ou vinylique capable de conduire à un homopolymère ayant une température de transition vitreuse supérieure ou égale à 0°C ;
(C) 0,5 à 6%, de préférence 1 à 3%, en poids d'au moins un monomère (méth)acrylique carboxylique ;
(D) 0 à 5%, de préférence 0 à 3%, en poids d'au moins un monomère (méth)acrylique éthoxylé à 1 à 20 moles, en particulier 1 à 5 moles, d'oxyde d'éthylène ;
(E) 0,05 à 1%, de préférence 0,1 à 0,5 %, en poids d'au moins un monomère (méth)acrylique ou vinylique comportant un groupe uréido ; et
(F) 0 à 2%, de préférence 0,5 à 1,5% en poids d'au moins un monomère acrylique ou vinylique portant une fonction sulfonate,
ledit polymère ayant une température de transition vitreuse inférieure ou égale à -25°C, de préférence inférieure ou égale à -40°C.

Les monomères (A) présentent une température de transition vitreuse généralement comprise entre -40°C et -80°C ; ils sont notamment choisis parmi l'acrylate de butyle, l'acrylate de n-octyle, l'acrylate d'isooctyle, l'acrylate de 2-éthylhexyle et le versatate de 2-éthylhexyle. Un monomère A particulièrement préféré est l'acrylate de 2-éthylhexyle.

Les monomères (B) présentent une température de transition vitreuse généralement comprise entre 10°C et 105°C ; ils sont notamment choisis parmi l'acrylate de méthyle, le méthacrylate de butyle, le méthacrylate de méthyle et l'acétate de vinyle. Des monomères (B) particulièrement préférés sont le méthacrylate de méthyle, l'acrylate de méthyle, l'acétate de vinyle et leurs mélanges.

Le monomère (C) est notamment l'acide acrylique ou l'acide méthacrylique, l'acide acrylique étant préféré.

A titre d'exemples des monomères (D) qui sont facultatifs, on peut citer l'acrylate de méthoxyéthyle, l'acrylate d'éthyldiglycol, le méthacrylate d'éthyltriglycol, ce dernier étant préféré. Les monomères (D) permettent d'augmenter les propriétés de collant à la boucle "loop tack", et de pelage.

Parmi les monomères (E) à groupe uréido, on peut citer, en particulier, le (méth)acrylate d'éthylimidazolidone, le (méth)acrylamide d'éthyleimidazolidone et la 1-[2-[[2-hydroxy-3-(2-propényloxy)-propyl]amino]éthyl]-2-imidazolidone. Parmi ceux-ci, on préfère le méthacrylate d'éthylimidazolidone.

Parmi les monomères (F) à groupe sulfonate, on peut citer en particulier le vinylsulfonate de sodium, l'acrylamidométhyl sulfonate de sodium, l'allyl éther sulfonate de sodium. Parmi ceux-ci, on préfère le vinyl sulfonate de sodium. Les monomères (F) permettent d'améliorer la stabilité colloïdale des dispersions pour polymères adhésifs sensibles à la pression, ainsi que les propriétés de mouillage des supports.

Les polymères selon l'invention sont préparés par polymérisation en émulsion dans les conditions bien connues de l'homme du métier. Ainsi, la réaction est préférentiellement conduite sous atmosphère inerte en présence d'amorceurs radicalaires. Le système d'amorçage utilisé peut être un système Red-Ox tel que K₂S₂O₈, (NH₄)₂S₂O₈ / Na₂S₂O₅, Na₂SO₃, un système thermique tel que (NH₄)₂S₂O₈, les quantités utilisées étant comprises entre 0,2 et 1,0% en poids par rapport à la masse totale des monomères, préférentiellement entre 0,25 et 0,5% en poids.

La réaction de polymérisation en émulsion selon l'invention est menée à une température comprise entre 65 et 85°C et est fonction de la nature du système d'amorçage utilisé : 65-75°C pour les systèmes Red-Ox à base de peroxodisulfate et de métabisulfite, 70-85°C pour les systèmes thermiques à base de peroxodisulfate seul.

La préparation des dispersions selon l'invention est effectuée de préférence selon un procédé de type semi-continu, permettant de limiter les dérives de composition qui sont fonction des différences de réactivité des différents monomères. L'introduction des monomères sous forme d'une préémulsion avec une partie de l'eau et des tensio-actifs est ainsi généralement réalisée sur une période de temps de 3 heures 30 à 5 heures. Il est également utile, bien que non indispensable, d'effectuer un ensemencement de 5 à 15% des monomères. Les systèmes émulsifiants utilisés dans le procédé de polymérisation en émulsion selon l'invention sont choisis dans la gamme des émulsifiants possédant une balance hydrophile/lipophile adaptée. Les systèmes préférés sont constitués par l'association d'un tensio-actif anionique, tel que le laurylsulfate de sodium, les nonylphénol sulfates éthoxylés en particulier à 20 - 25 moles d'oxyde d'éthylène, le benzène dodécylsulfonate et les alcools gras éthoxylés sulfates, et d'un tensio-actif non ionique, tel que les nonylphénols éthoxylés en particulier à 10 - 40 moles d'oxyde d'éthylène et les alcools gras éthoxylés.

La quantité totale d'émulsifiant est comprise dans la gamme de 2 à 4% en poids et préférentiellement de 2,5 à 3,7% en poids par rapport aux monomères. Les meilleurs résultats sont obtenus en utilisant les proportions en poids en tensio-actif anionique / tensio-actif non ionique allant de 25/75 à 60/40 en fonction de la nature des monomères utilisés.

Les dispersions de polymères destinées à être appliquées comme autoadhésifs selon l'invention sont préférentiellement synthétisées pour de hauts extraits secs, de l'ordre de 50 à 65% en poids, pour permettre un séchage rapide lors de l'application.

Pour obtenir des extraits secs supérieurs à 60%, il est par ailleurs préférable de bien contrôler les séquences d'ajout de tensio-actifs de façon à obtenir la répartition granulométrique appropriée pour éviter une trop grande viscosité.

De manière à obtenir une meilleure applicabilité sur les supports, il est possible d'ajuster la rhéologie par l'ajout d'un épaississant adapté en faibles quantités : généralement inférieures à 0,2% en poids par rapport à la dispersion finale. Il est également possible, bien que non indispensable, d'ajouter un agent tackifiant pour améliorer l'adhésion sur des supports non polaires, tels que le polyéthylène.

Les polymères obtenus dans le procédé selon l'invention conduisent à des adhésifs sensibles à la pression présentant un haut niveau de cohésion tout en gardant de bonnes valeurs de pelage et de collant. Ces nouveaux adhésifs peuvent ainsi être utilisés pour remplacer les polymères en phase solvant coûteux et néfastes pour l'environnement.

Comme déjà indiqué, l'augmentation importante de la force cohésive est obtenue par copolymérisation d'au moins un monomère possédant un groupe pendant uréido, tel que le méthacrylate d'éthylimidazolidone. Les monomères possédant ces groupes uréido très polaires peuvent être à l'origine d'associations polaires, telles que des liaisons hydrogène ou dipôle-dipôle, qui vont contribuer à augmenter de manière importante la masse moléculaire et jouer ainsi sur les propriétés visco-élastiques de l'adhésif.

La copolymérisation du monomère uréido peut s'effectuer selon un procédé semi-continu en une seule étape mais aussi selon un procédé semi-continu en deux étapes où le monomère uréido est réparti préférentiellement dans la seconde étape sans toutefois exclure son emploi dans la première étape.

Pour conserver les propriétés nécessaires de pelage et de collant avec de bonnes propriétés cohésives, il est préférable d'ajuster la masse moléculaire du polymère par utilisation d'une quantité adaptée d'un agent de transfert, tel que les alkyl mercaptans (tert.-dodécylmercaptan, n-dodécylmercaptan), les mercaptopropionates d'alkyle, ou l'acide thioglycolique. Les quantités d'agent de transfert selon l'invention peuvent aller jusqu'à 0,25% en poids par rapport aux monomères, étant notamment comprises entre 0,01% à 0,25% en poids des monomères, préférentiellement de 0,05 à 0,2% en poids. Il est également possible d'augmenter la quantité d'amorceur utilisée pour réduire la masse moléculaire.

Il est également démontré que l'association d'au moins un monomère acrylique éthoxylé tel que défini ci-dessus permettait de contribuer à la conservation de bonnes propriétés de pelage et de collant à côté des fortes propriétés cohésives apportées par le ou les monomères à structure uréido.

La force cohésive importante associée aux adhésifs selon la présente invention rend aussi ces derniers compatibles avec l'emploi d'agents tackifiants utilisés pour augmenter l'adhésion sur les supports de faible énergie de surface, tels que les polyoléfines.

Les dispersions selon l'invention peuvent être utilisées seules pour conduire à la formulation d'autoadhésifs possédant les propriétés désirées, mais aussi en mélange avec d'autres dispersions dans les conditions de formulation jugées optimales pour l'application.

Ainsi, la présente invention porte également sur un adhésif consistant en ou comprenant au moins une dispersion d'un polymère tel que défini ci-dessus. On peut citer par exemple un adhésif constitué par un mélange (1) d'au moins une dispersion d'un polymère tel que défini ci-dessus et (2) d'au moins une dispersion d'un polymère obtenu par polymérisation en émulsion du mélange des monomères (A), (B), (C) et éventuellement (D) et (F), tels que définis ci-dessus.

En particulier, on peut citer un adhésif constitué par le mélange de (1) et (2) ci-dessus, (1) représentant au moins 40% en poids dudit mélange.

La présente invention va maintenant être décrite à l'aide d'exemples et d'exemples comparatifs. Dans ces Exemples, toutes les "parties" et tous les pourcentages sont en poids sauf indication contraire.

### EXEMPLE 1 (comparatif)

Dans un réacteur de 3 litres, muni d'une agitation mécanique centrale et d'une arrivée d'azote, et surmonté par un réfrigérant, on introduit 36,8 parties d'eau déminéralisée, 0,265 partie de nonylphénol polyoxyéthyléné à 10 moles d'oxyde d'éthylène (commercialisé sous la marque SYNTHOPON®), 0,09 partie de lauryl sulfate de sodium (commercialisé sous la marque TEXAPON®). Puis le réacteur est dégazé par circulation d'azote et son contenu est porté à 70°C à l'aide d'un bain-marie. On introduit alors 0,35 partie de métabisulfite de sodium, puis on ajoute une préémulsion ayant la composition suivante :

| | |
|---|---|
| Acrylate de 2-éthylhexyle | 56 parties |
| Acrylate de méthyle | 41,5 " |
| Acide acrylique | 2,5 " |
| Eau déminéralisée | 37,8 " |
| n-Dodécylmercaptan | 0,1 " |
| Nonylphénol polyoxyéthyléné à 10 moles d'oxyde d'éthylène (SYNTHOPON®) | 2,39 " |
| Lauryl sulfate de sodium (TEXAPON®) | 0,81 " |

et une solution de 0,35 partie de peroxodisulfate d'ammonium dans 6 parties d'eau déminéralisée, en 3 h 30 mn sous agitation (100 tpm).

Les additions terminées, on maintient le milieu réactionnel 1 h 30 mn à 70°C, puis on laisse refroidir à la température ambiante.

La dispersion obtenue possède les caractéristiques suivantes :
- Viscosité Brookfield à 29°C : 480 mPa.s
- Dimension moyenne des particules : 214 nm
- Extrait sec : 55,2%.

### EXEMPLE 2 (comparatif)

On reprend le mode opératoire de l'Exemple 1 en incorporant une préémulsion ayant la composition suivante :

| | |
|---|---|
| Acrylate de 2-éthylhexyle | 56 parties |
| Acrylate de méthyle | 38,5 " |
| Acide acrylique | 2,5 " |
| Eau déminéralisée | 37,8 " |
| n-Dodécylmercaptan | 0,1 " |
| Nonylphénol polyoxyéthyléné à 10 moles d'oxyde d'éthylène (SYNTHOPON®) | 2,39 " |
| Lauryl sulfate de sodium (TEXAPON®) | 0,81 " |
| Méthacrylate d'éthyltriglycol | 3 " |

La dispersion obtenue possède les caractéristiques suivantes :
- Viscosité Brookfield à 23°C : 930 mPa.s
- Taille moyenne des particules : 130 nm
- Extrait sec : 56,1%.

### EXEMPLE 3 (comparatif)

On reprend le mode opératoire de l'Exemple 2 en remplaçant les 3 parties de méthacrylate d'éthyltriglycol par 3 parties d'acrylate de méthoxyéthyle.

La dispersion obtenue possède les caractéristiques suivantes :
- Viscosité Brookfield à 23°C : 620 mPa.s
- Taille moyenne des particules : 202 nm
- Extrait sec : 55,1%.

### EXEMPLES 4 à 6

On reprend le mode opératoire de l'Exemple 1 en ajoutant des quantités croissantes de méthacrylate d'éthylimidazolidone dans la composition de la préémulsion.

Ces quantités ainsi que les caractéristiques des dispersions obtenues sont indiquées dans le Tableau 1 ci-après.

**TABLEAU 1**

| Exemple | 4 | 5 | 6 |
|---|---|---|---|
| Méthacrylate d'éthylimidazolidone (parties) | 0,2 | 0,5 | 1,0 |
| Viscosité Brookfield à 23°C (mPa.s) | 500 | 475 | 920 |
| Taille moyenne des particules (nm) | 227 | 231 | 165 |
| Extrait sec (%) | 55,6 | 54,8 | 54,2 |

### EXEMPLE 7

On reprend le mode opératoire de l'Exemple 4 en remplaçant le méthacrylate d'éthylimidazolidone par une formulation à 20% de ce dernier dans du méthacrylate de méthyle (formulation commercialisée par la Société "ELF ATOCHEM" sous la marque "NORSOCRYL® 100").

La dispersion obtenue possède les caractéristiques suivantes :
- Viscosité Brookfield à 23°C : 475 mPa.s
- Dimension des particules : 200 nm
- Extrait sec : 55,7%.

### EXEMPLE 8

On reprend le mode opératoire de l'Exemple 5 en remplaçant le méthacrylate d'éthylimidazolidone par le méthacrylamide d'éthylimidazolidone.

La dispersion obtenue a les caractéristiques suivantes :
- Viscosité Brookfield à 23°C : 550 mPa.s
- Dimension des particules : 195 nm
- Extrait sec : 56,0%.

### EXEMPLES 9 à 11

On reprend le mode opératoire de l'Exemple 1 en utilisant les compositions monomériques indiquées dans le Tableau 2 ci-après. Dans ce tableau, sont également indiquées les caractéristiques des dispersions obtenues.

**TABLEAU 2**

| Exemple | 9 | 10 | 11 |
|---|---|---|---|
| Composition en monomères (parties) | | | |
| Acrylate de méthyle | 40,4 | 40,4 | 33,6 |
| Acrylate de 2-éthylhexyle | 53,8 | 53,8 | 60,6 |
| Acide acrylique | 2,5 | 2,5 | 2,5 |
| Méthacrylate d'éthyltriglycol | 3 | 3 | 3 |
| Méthacrylate d'éthylimidazolidone | 0,3 | 0,3 | 0,3 |
| Dodécylmercaptan | 0,1 | 0,2 | 0,1 |
| Viscosité Brookfield à 23°C (mPa.s) | 550 | 310 | 775 |
| Taille moyenne des particules (nm) | 212 | 239 | 205 |
| Extrait sec (%) | 55,8 | 55,8 | 55,8 |

### EXEMPLE 12

Des mesures de pelage, de collant à la boucle "loop tack" et de fluage ont été conduites avec les dispersions obtenues conformément aux Exemples 1 à 11. Les résultats sont rapportés dans le Tableau 3 ci-après.

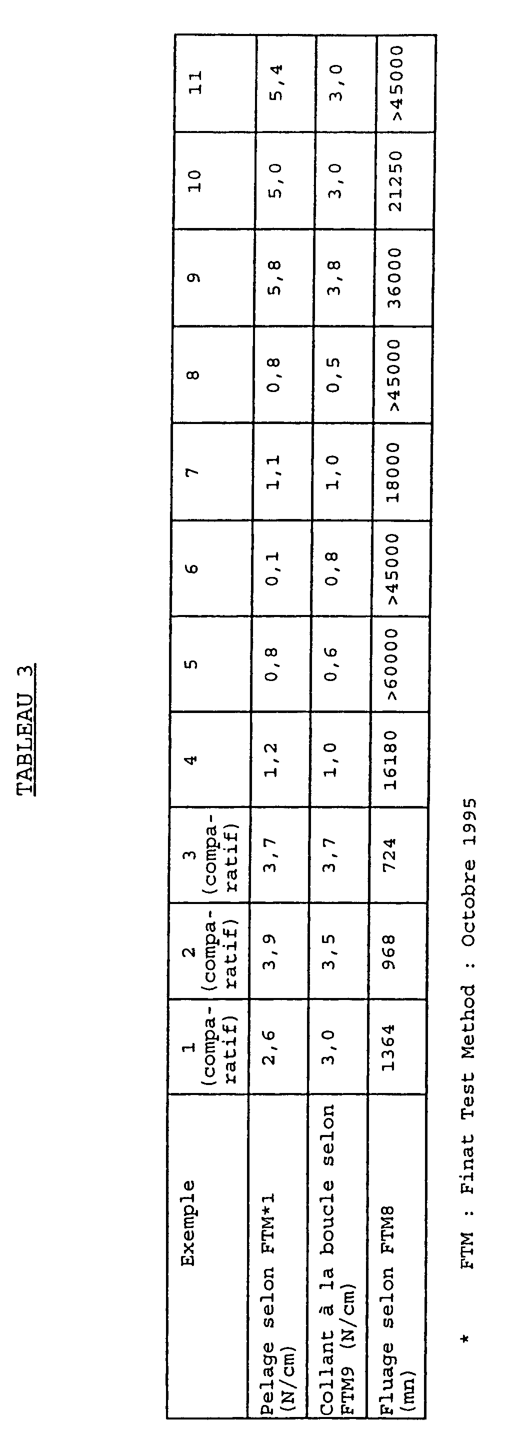

### EXEMPLE 13 (comparatif)

On reprend le mode opératoire de l'Exemple 1 en incorporant une préémulsion ayant la composition suivante :

| | |
|---|---|
| Acrylate de 2-éthylhexyle | 75,7 parties |
| Acétate de vinyle | 18 " |
| Acide acrylique | 5,3 " |
| Vinyl sulfonate de sodium | 1 " |
| Eau déminéralisée | 34,7 " |
| Tensio-actif anionique commercialisé par la Société RHÔNE-POULENC sous la dénomination "ADEX 26 S" | 5,71 " |
| Nonyl phénol éthoxylé à 25 moles d'oxyde d'éthylène, commercialisé par la Société WITCO sous la dénomination "REWOPAL HV 25" | 2,50 " |

La dispersion obtenue possède les caractéristiques suivantes :
- Viscosité Brookfield à 23°C : 1500 mPa.s
- Taille moyenne des particules : 208 nm
- Extrait sec : 56,1%.

### EXEMPLE 14

On reprend le mode opératoire de l'Exemple 13 en remplaçant 1,5 parties d'acétate de vinyle par 1,5 parties d'une formulation comportant 20% de méthacrylate d'éthylimidazolidone dans du méthacrylate de méthyle (formulation commercialisée par la société "ELF ATOCHEM" sous la marque "NORSOCRYL 100").

La dispersion obtenue possède les caractéristiques suivantes :
- Viscosité Brookfield à 23°C : 1640 mPa.s
- Taille moyenne des particules : 205 nm
- Extrait sec : 55,7%.

### EXEMPLE 15

Des mesures de pelage, de collant à la boucle "loop tack" et de fluage ont été conduites avec les dispersions obtenues conformément aux Exemples 13 et 14. Les résultats sont rapportés dans le Tableau 4 ci-après.

**TABLEAU 4**

| Exemple | 13 (comparatif) | 14 |
|---|---|---|
| Pelage selon FTM1 (N/cm) | 2,5 | 2,7 |
| Collant à la boucle selon FTM9 (N/cm) | 3,3 | 4,7 |
| Fluage selon FTM8 (mn) | 3000 | > 30 000 |

### EXEMPLES 16 (comparatif) et 17

On reprend le mode opératoire de l'Exemple 1 en utilisant les compositions monomériques indiquées dans le Tableau 5 ci-après. Dans ce tableau figurent également les caractéristiques des dispersions obtenues.

**TABLEAU 5**

| Exemple | 16 (comparatif) | 17 |
|---|---|---|
| Composition en monomères (parties) | | |
| Acrylate de 2-éthylhexyle | 93,5 | 95,0 |
| Acide acrylique | 2,5 | 2,5 |
| Méthacrylate de méthyle | 4,0 | - |
| Méthacrylate d'éthylimidazolidone formulé à 20% dans le méthacrylate de méthyle (NORSOCRYL 100) | - | 2,5 |
| Viscosité Brookfield à 23°C (mPa.s) | 1550 | 960 |
| Taille moyenne des particules (nm) | 150 | 182 |
| Extrait sec (%) | 54 | 55 |

### EXEMPLE 18

Des mesures de pelage, de collant à la boucle "loop tack" et de fluage ont été conduites avec les dispersions obtenues conformément aux Exemples 16 et 17. Les résultats sont rapportés dans le Tableau 6 ci-après.

**TABLEAU 6**

| Exemple | 16 (comparatif) | 17 |
|---|---|---|
| Pelage selon FTM1 (N/cm) | 3,0 | 1,5 |
| Collant à la boucle selon FTM9 (N/cm) | 3,2 | 3,0 |
| Fluage selon FTM8 (mn) | 73 | > 30 000 |

### Exemples 19 (comparatif) et 20

On reprend le mode opératoire de l'Exemple 1 en utilisant les compositions numériques indiquées dans le Tableau 7 ci-après. Dans ce tableau, sont également indiquées les caractéristiques des dispersions obtenues.

**TABLEAU 7**

| Exemple | 19 (comparatif) | 20 |
|---|---|---|
| Composition en monomères (parties) | | |
| Acrylate de 2-éthylhexyle | 97,5 | 92,5 |
| Acide acrylique | 2,5 | 2,5 |
| Formulation à 20% de méthacrylate d'éthylimidazolidone dans du méthacrylate de méthyle | 0 | 5 |
| Extrait sec (%) | 55 | 55 |
| Viscosité Brookfield à 23°C (mPa.s) | 110 | 550 |
| Taille moyenne des particules (nm) | 100 | 100 |

### Exemple 21 : Evaluation applicative des latex selon l'Exemple 19 (comparatif) et selon l'Exemple 20 et de mélanges de ces deux latex

Des mesures de fluage et de collant ont été conduites avec les latex obtenus conformément aux Exemples 19 (comparatif) et 20 et avec différents mélanges de ces latex. Les résultats sont rapportés dans le Tableau 8 ci-après.

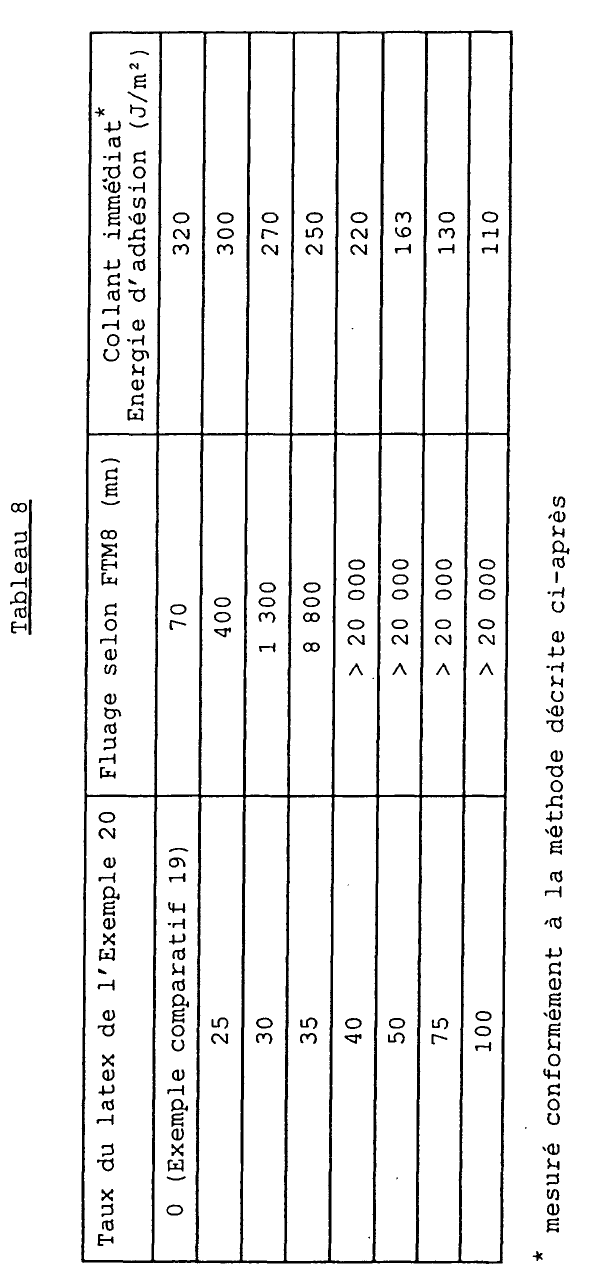

La mesure de l'énergie d'adhésion, qui permet de classer les adhésifs selon le collant immédiat qu'ils présentent lors d'une courte et faible application d'une sonde, teste à la fois les propriétés de surface et les propriétés visco-élastiques en rupture adhésive, sans rupture cohésive. La méthode de mesure va maintenant être décrite avec référence au dessin annexé, sur lequel :
- la Figure 1 illustre de façon schématique le déroulement d'une telle mesure ; et
- la Figure 2 est le diagramme de l'évolution dans le temps de la contrainte appliquée sur l'adhésif.

Un film (1) de chaque adhésif à étudier est appliqué sur une plaquette en aluminium (2) préalablement dégraissée. Les plaquettes ainsi enduites sont entreposées pour sécher dans une salle climatisée avec une humidité ambiante constante pendant 48 heures. Ensuite, on applique sur les adhésifs une sonde ou poinçon (3) dans des conditions précises de temps de contact du poinçon sur l'adhésif (t_{c}), de force de contact (F) et de vitesse de remontée du poinçon (v).

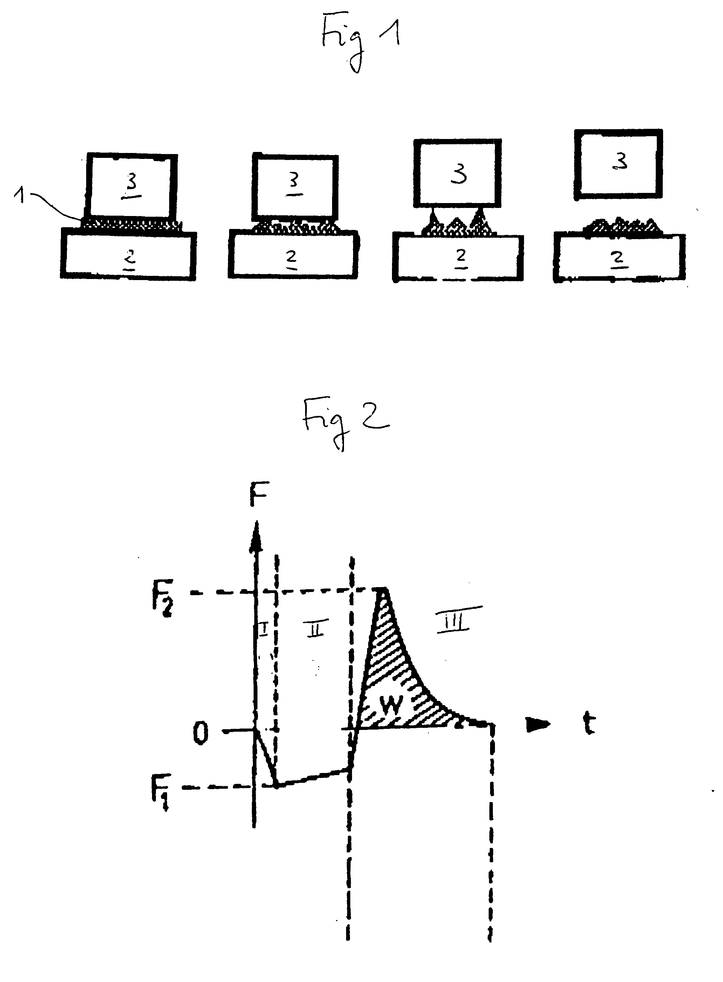

On enregistre l'évolution dans le temps de la contrainte (F) appliquée sur l'adhésif avec les paramètres de sonde suivants (cf Figure 2) :
I : période d'application de la contrainte
II : période de relaxation (formation de la liaison)
III : traction (séparation de la liaison)

L'énergie d'adhésion calculée (W) correspond à l'aire sous la courbe (après avoir fait la correspondance temps/déplacement).

Le latex de l'Exemple comparatif 19 est très collant et pas du tout cohésif.

Le mélange des deux latex permet d'atteindre un compromis de performance autour de 40% du latex de l'Exemple 20 de l'invention, sachant que le collant immédiat est jugé satisfaisant à partir de 200 J/m².

## Revendications

1. Polymère adhésif sensible à la pression, obtenu par polymérisation en émulsion d'un mélange de monomères pour un total de 100% en poids :
(A) 40 à 95% en poids d'au moins un monomère (méth)acrylique ou vinylique capable de conduire à un homopolymère ayant une température de transition vitreuse inférieure ou égale à -40°C ;
(B) 2 à 50% en poids d'au moins un monomère (méth)acrylique ou vinylique capable de conduire à un homopolymère ayant une température de transition vitreuse supérieure ou égale à 0°C ;
(C) 0,5 à 6% en poids d'au moins un monomère (méth)acrylique carboxylique ;
(D) 0 à 5% en poids d'au moins un monomère (méth)acrylique éthoxylé à 1 à 20 moles d'oxyde d'éthylène ;
(E) 0,05 à 1% en poids d'au moins un monomère (méth)acrylique ou vinylique comportant un groupe uréido ; et
(F) 0 à 2% en poids d'au moins un monomère acrylique ou vinylique portant une fonction sulfonate,
ledit polymère ayant une température de transition vitreuse inférieure ou égale à -25°C.

2. Polymère selon la revendication 1, **caractérisé par le fait qu'**il est obtenu par copolymérisation en émulsion de :
· 50 à 65% en poids de (A) ;
· 25 à 45% en poids de (B) ;
· 1 à 3% en poids de (C) ;
· 0 à 3% en poids de (D) ;
· 0,1 à 0,5% en poids de (E) ; et
· 0,5 à 1,5% en poids de (F).

3. Polymère selon l'une des revendications 1 et 2 **caractérisé par le fait qu'**il a une température de transition vitreuse inférieure ou égale à -40°C.

4. Polymère selon l'une des revendications 1 à 3, **caractérisé par le fait que** les monomères (A) sont choisis parmi l'acrylate de butyle, l'acrylate de n-octyle, l'acrylate d'isooctyle, l'acrylate de 2-éthylhexyle et le versatate de 2-éthylhexyle.

5. Polymère selon l'une des revendications 1 à 4, **caractérisé par le fait que** les monomères (B) sont choisis parmi l'acrylate de méthyle, le méthacrylate de butyle, le méthacrylate de méthyle et l'acétate de vinyle.

6. Polymère selon l'une des revendications 1 à 5, **caractérisé par le fait que** les monomères (C) sont choisis parmi l'acide acrylique et l'acide méthacrylique.

7. Polymère selon l'une des revendications 1 à 6, **caractérisé par le fait que** les monomères (D) sont choisis parmi l'acrylate de méthoxyéthyle, l'acrylate d'éthyldiglycol et le méthacrylate d'éthyltriglycol.

8. Polymère selon l'une des revendications 1 à 7, **caractérisé par le fait que** les monomères (E) sont choisis parmi le (méth)acrylate d'éthylimidazolidone, le (méth)acrylamide d'éthylimidazolidone et la 1-[2-[[2-hydroxy-3-(2-propényloxy)propyl]amino]éthyl]-2-imidazolidone.

9. Polymère selon l'une des revendications 1 à 8, **caractérisé par le fait qu'**il a été obtenu par polymérisation en émulsion en présence d'au moins un agent de transfert, utilisé dans une quantité allant jusqu'à 0,25% en poids, notamment de 0,01 à 0,25% en poids, préférentiellement de 0,05 à 0,2% en poids, par rapport aux monomères.

10. Polymère selon la revendication 9, **caractérisé par le fait que** l'agent de transfert est choisi parmi les alkylmercaptans, les mercaptopropionates d'alkyle et l'acide thiogycolique.

11. Polymère selon l'une des revendications 1 à 10, **caractérisé par le fait qu'**il a été obtenu par polymérisation en émulsion du mélange de monomères en présence de 2 à 4% en poids, de préférence de 2,5 à 3,7% en poids, par rapport aux monomères d'au moins un agent émulsifiant choisi parmi les agents tensio-actifs anioniques, tels que le laurylsulfate de sodium, les nonylphénol sulfates éthoxylés en particulier à 20 - 25 moles d'oxyde d'éthylène, le benzène dodécylsulfonate et les alcools gras éthoxylés sulfates, et les agents tensio-actif hon-ioniques, tels que les nonylphénols éthoxylés en particulier à 10 - 40 moles d'oxyde d'éthylène et les alcools gras éthoxylés, en particulier avec des proportions en poids en tensio-actif anionique / tensio-actif non-ionique allant de 25/75 à 60/40.

12. Adhésif consistant en ou comprenant au moins une dispersion d'un polymère tel que défini à l'une des revendications 1 à 11.

13. Adhésif selon la revendication 12, **caractérisé par le fait qu'**il est constitué par un mélange d'au moins une dispersion d'un polymère tel que défini à l'une des revendications 1 à 11 et d'au moins une dispersion d'un polymère obtenu par polymérisation en émulsion du mélange des monomères (A), (B), (C), et éventuellement (D) et (F), tels que définis à la revendication 1.

14. Adhésif selon la revendication 13, **caractérisé par le fait que** la ou les dispersions du polymère tel que défini à l'une des revendications 1 à 11 représentent au moins 40% en poids du mélange.

## Claims

1. Pressure-sensitive adhesive polymer obtained by emulsion polymerization of a mixture of monomers, for a total of 100 % by weight:
(A) 40 to 95 % by weight of at least one (meth)acrylic or vinyl monomer capable of resulting in a homopolymer which has a glass transition temperature lower than or equal to -40°C;
(B) 2 to 50 % by weight of at least one (meth)acrylic or vinyl monomer capable of resulting in a homopolymer which has a glass transition temperature higher than or equal to 0°C;
(C) 0.5 to 6 % by weight of at least one carboxylic (meth)acrylic monomer;
(D) 0 to 5 % by weight of at least one (meth)acrylic monomer ethoxylated with 1 to 20 moles of ethylene oxide;
(E) 0.05 to 1 % by weight of at least one (meth)acrylic or vinyl monomer containing a ureido group; and
(F) 0 to 2 % by weight of at least one acrylic or vinyl monomer carrying a sulphonate functional group,
the said polymer having a glass transition temperature lower than or equal to -25°C.

2. Polymer according to Claim 1, **characterized in that** it is obtained by emulsion copolymerization of:
- 50 to 65 % by weight of (A);
- 25 to 45 % by weight of (B);
- 1 to 3 % by weight of (C);
- 0 to 3 % by weight of (D);
- 0.1 to 0.5 % by weight of (E); and
- 0.5 to 1.5 % by weight of (F).

3. Polymer according to one of Claims 1 and 2, **characterized in that** it has a glass transition temperature lower than or equal to -40°C.

4. Polymer according to one of Claims 1 to 3, **characterized in that** the monomers (A) are chosen from butyl acrylate, n-octyl acrylate, isooctyl acrylate, 2-ethylhexyl acrylate and 2-ethylhexyl versatate.

5. Polymer according to one of Claims 1 to 4, **characterized in that** the monomers (B) are chosen from methyl acrylate, butyl methacrylate, methyl methacrylate and vinyl acetate.

6. Polymer according to one of Claims 1 to 5, **characterized in that** the monomers (C) are chosen from acrylic acid and methacrylic acid.

7. Polymer according to one of Claims 1 to 6, **characterized in that** the monomers (D) are chosen from methoxyethyl acrylate, ethyldiglycol acrylate and ethyltriglycol methacrylate.

8. Polymer according to one of Claims 1 to 7, **characterized in that** the monomers (E) are chosen from ethylimidazolidone (meth)acrylate, ethylimidazolidone (meth)acrylamide and 1-[2-[[2-hydroxy-3-(2-propenyloxy)-propyl]amino]ethyl]-2-imidazolidone.

9. Polymer according to one of Claims 1 to 8, **characterized in that** it has been obtained by emulsion polymerization in the presence of at least one transfer agent employed in a quantity ranging up to 0.25 % by weight, especially of 0.01 to 0.25 % by weight, preferably of 0.05 to 0.2 % by weight, relative to the monomers.

10. Polymer according to Claim 9, **characterized in that** the transfer agent is chosen from alkyl mercaptans, alkyl mercaptopropionates and thioglycolic acid.

11. Polymer according to one of Claims 1 to 10, **characterized in that** it has been obtained by emulsion polymerization of the monomer mixture in the presence of 2 to 4 % by weight, preferably of 2.5 to 3.7 % by weight, relative to the monomers, of at least one emulsifying agent chosen from anionic surface-active agents, such as sodium lauryl sulphate, nonylphenol sulphate ethoxylated in particular with 20-25 moles of ethylene oxide, dodecylbenzenesulphonate and ethoxylated fatty alcohol sulphates, and nonionic surface-active agents such as nonylphenols ethoxylated in particular with 10-40 moles of ethylene oxide and ethoxylated fatty alcohols, in particular with weight proportions of anionic surfactant/nonionic surfactant ranging from 25/75 to 60/40.

12. Adhesive consisting of or including at least one dispersion of a polymer as defined in one of Claims 1 to 11.

13. Adhesive according to Claim 12, **characterized in that** it consists of a mixture of at least one dispersion of a polymer as defined in one of Claims 1 to 11 and of at least one dispersion of a polymer obtained by emulsion polymerization of the mixture of the monomers (A), (B), (C) and optionally (D) and (F), which are as defined in Claim 1.

14. Adhesive according to Claim 13, **characterized in that** the dispersion or dispersions of the polymer as defined in one of Claims 1 to 11 represent at least 40 % by weight of the mixture.

## Patentansprüche

1. Druckempfindliches, haftendes Polymer, das durch Emulsionspolymerisation eines Gemisches der folgenden Monomeren auf insgesamt 100 Gew.-% hergestellt wird:
(A) 40 bis 95 Gew.-% mindestens eines (Meth)acrylmonomers oder Vinylmonomers, das befähigt ist, ein Homopolymer mit einer Glasübergangstemperatur von -40 °C oder darunter zu bilden;
(B) 2 bis 50 Gew.-% mindestens eines (Meth)acrylmonomers oder Vinylmonomers, das befähigt ist, ein Homopolymer mit einer Glasübergangstemperatur von 0 °C oder darüber zu bilden;
(C) 0,5 bis 6 Gew.-% mindestens eines Carboxy(meth)acrylmonomers;
(D) 0 bis 5 Gew.-% mindestens eines ethoxylierten (Meth)acrylmonomers mit 1 bis 20 mol Ethylenoxid;
(E) 0,05 bis 1 Gew.-% mindestens eines (Meth)acrylmonomers oder Vinylmonomers mit einer Ureidogruppe; und
(F) 0 bis 2 Gew.-% mindestens eines Acrylmonomers oder Vinylmonomers, das eine Sulfonatgruppe trägt,
wobei das Polymer eine Glasübergangstemperatur von -25 °C oder darunter aufweist.

2. Polymer nach Anspruch 1, **dadurch gekennzeichnet, daß** es durch Copolymerisation von
• 50 bis 65 Gew.-% (A);
• 25 bis 45 Gew.-% (B);
• 1 bis 3 Gew.-% (C);
• 0 bis 3 Gew.-% (D);
• 0,1 bis 0,5 Gew.-% (E) und
• 0,5 bis 1,5 Gew.-% (F)
in Emulsion hergestellt wird.

3. Polymer nach einem der Ansprüche 1 und 2, **dadurch gekennzeichnet, daß** es eine Glasübergangstemperatur von höchstens -40°C aufweist.

4. Polymer nach einem der Ansprüche 1 bis 3, **dadurch gekennzeichnet, daß** die Monomere (A) unter Butylacrylat, n-Octylacrylat, Isooctylacrylat, 2-Ethylhexylacrylat und 2-Ethylhexylversatat ausgewählt sind.

5. Polymer nach einem der Ansprüche 1 bis 4, **dadurch gekennzeichnet, daß** die Monomere (B) unter Methylacrylat, Butylmethacrylat, Methylmethacrylat und Vinylacetat ausgewählt sind.

6. Polymer nach einem der Ansprüche 1 bis 5, **dadurch gekennzeichnet, daß** die Monomere (C) unter Acrylsäure und Methacrylsäure ausgewählt sind.

7. Polymer nach einem der Ansprüche 1 bis 6, **dadurch gekennzeichnet, daß** die Monomere (D) unter Methoxyethylacrylat, Ethyldiglykolacrylat und Ethyltriglykolmethacrylat ausgewählt sind.

8. Polymer nach einem der Ansprüche 1 bis 7, **dadurch gekennzeichnet, daß** die Monomere (E) unter Ethylimidazolidon(meth)-acrylat, Ethylimidazolidon(meth)acrylamid und 1-[2-[[2-Hydroxy-3-(2-propenyloxy)propyl]amino]ethyl]-2-imidazolidon ausgewählt sind.

9. Polymer nach einem der Ansprüche 1 bis 8, **dadurch gekennzeichnet, daß** es durch Emulsionspolymerisation in Gegenwart mindestens eines Transfermittels hergestellt wird, das in einer Menge von bis zu 0,25 Gew.-%, insbesondere 0,01 bis 0,25 Gew.-% und vorzugsweise 0,05 bis 0,2 Gew.-%, bezogen auf die Monomere, verwendet wird.

10. Polymer nach Anspruch 9, **dadurch gekennzeichnet, daß** das Transfermittel unter den Alkylmercaptanen, Alkylmercaptopropionaten und Thioglykolsäure ausgewählt ist.

11. Polymer nach einem der Ansprüche 1 bis 10, **dadurch gekennzeichnet, daß** es durch Emulsionspolymerisation des Monomerengemisches in Gegenwart von, bezogen auf die Monomere, 2 bis 4 Gew.-% und vorzugsweise 2,5 bis 3,7 Gew.-% mindestens eines Emulgators hergestellt wird, der unter den anionischen grenzflächenaktiven Stoffen, wie Natriumlaurylsulfat, ethoxylierten Nonylphenolsulfaten, die insbesondere 20 bis 25 mol Ethylenoxid aufweisen, Benzoldodecylsulfonat und ethoxylierten Fettalkoholsulfaten, und den nichtionischen grenzflächenaktiven Stoffen ausgewählt ist, wie beispielsweise ethoxylierten Nonylphenolen mit insbesondere 10 bis 40 mol Ethylenoxid und ethoxylierten Fettalkoholen, wobei die Gewichtsanteile des anionischen grenzflächenaktiven Stoffes und des nichtionischen grenzflächenaktiven Stoffes insbesondere im Bereich von 25/75 bis 60/40 liegen.

12. Klebstoff, der aus einer Dispersion eines Polymers nach einem der Ansprüche 1 bis 11 besteht oder mindestens eine solche Dispersion enthält.

13. Klebstoff nach Anspruch 12, **dadurch gekennzeichnet, daß** er aus einem Gemisch mindestens einer Dispersion eines Polymers nach einem der Ansprüche 1 bis 11 und mindestens einer Dispersion eines Polymers besteht, das durch Emulsionspolymerisation des Gemisches der Monomere (A), (B), (C) und gegebenenfalls (D) und (F) nach Anspruch 1 hergestellt ist.

14. Klebstoff nach Anspruch 13, **dadurch gekennzeichnet, daß** die Dispersion(en) des Polymers nach einem der Ansprüche 1 bis 11 mindestens 40 Gew.-% des Gemisches ausmachen.
